# EUROPEAN PATENT APPLICATION

(11) **EP 1 850 535 A1**
(43) Date of publication of application: **31.10.2007**
(21) Application number: 06300409.7
(22) Date of filing: 26.04.2006
(51) Int. Cl.: H04L 12/56, H04L 12/28, H04Q 7/32

(54) **Software configurable and definable base station**

(71) Applicant: Alcatel Lucent, 75008 Paris (FR)
(72) Inventor: Barth, Ulrich, 70825, Münchingen (DE); Haberland, Bernd, 70186, Stuttgart (DE)
(74) Representative: Brose, Gerhard

(57) **Abstract**

A base station (30) is described, comprising a software controllable and software definable equipment (31, 32, 33, 34, 35) that via software definition provides a Node B for the current UTRAN architecture or a future eNode B for the future EUTRAN architecture or both at the same time, in order to be able to provide current UTRAN Node B functionalities or future EUTRAN eNode B functionalities or current UTRAN Node B functionalities and future EUTRAN eNode B functionalities at the same time via software control. Furthermore a method to deploy a current UTRAN node B and a future EUTRAN eNode B with one base station (30) is described, plus a computer program product comprising computer program means enabling a software definable and configurable equipment (31, 32, 33, 34, 35) within a base station (30) to realize at least the functionalities of a current UTRAN Node B or the functionalities of a future EUTRAN eNode B or both, when being executed on said software definable and configurable equipment (31, 32, 33, 34, 35). Finally a Radio Access Network is described comprising a plurality of base stations (30) as mentioned above.

## Description

The invention relates to a base station according to the preamble of claim 1, plus to a method to deploy a current UTRAN Node B and a future evolved UTRAN Node B with one base station according to claim 6, plus to a computer program product according to claim 7.

Current UMTS (Universal Mobile Telecommunication System) networks provide so called Circuit Switched (CS) services for real time communication services like e.g. telephone calls and/or video conferences and the like, plus so called Packet Switched (PS) services to provide multimedia services like e.g. Internet data transfer.

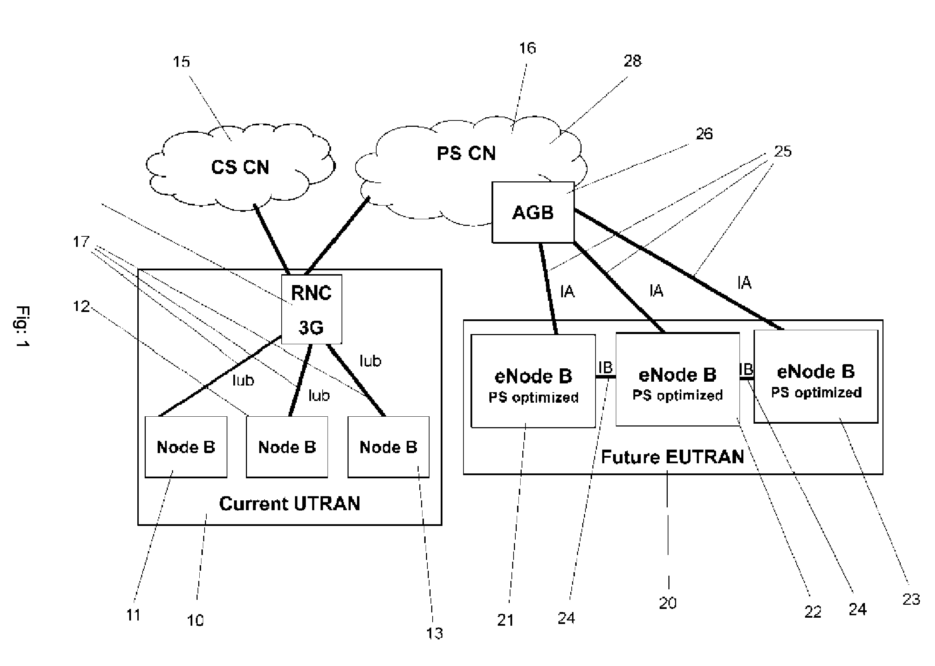

The architecture of a known UTRAN (UMTS Terrestrial Radio Access Network) 10 is shown in Fig. 1 on the left side. The UTRAN 10 basically comprises a plurality of base stations 11, 12, 13, also called Node Bs, that are all connected via an interface connection lub 17, with a Radio Network Controller (RNC) 14 respectively. The RNC 14 itself is connected via individual interface connections lu-CS, lu-PS with two Core Networks (CN), a first one 15 providing CS services and a second one 16 providing PS services.

Since the performance of the current UTRAN may not be sufficient for introducing new high demanding multimedia services that primarily base on PS services, 3GPP (Third Generation Partnership Project) Long Term Evolution (LTE) proposes to introduce an improved UMTS overlay network called EUTRAN (Evolved UTRAN) providing high-speed PS services only. Thereby in an evolutional step it is foreseen to migrate all services step-by-step to the improved packet based overlay network.

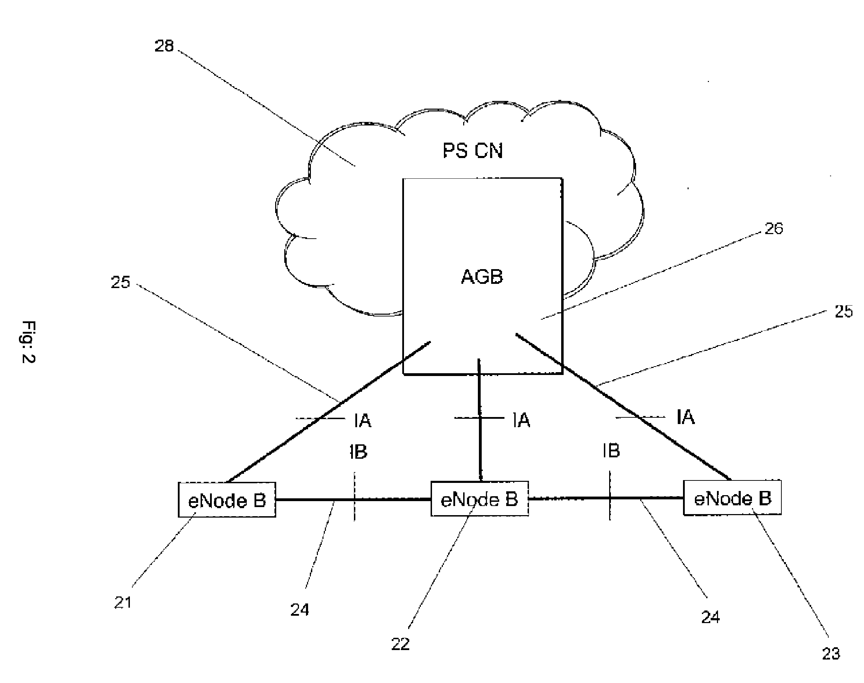

The architecture of the EUTRAN overlay network, in the following also just called overlay network, is shown on the right side of Fig. 1 and in Fig. 2. The overlay network 20 basically comprises a plurality of base stations 21, 22, 23, also called eNode Bs (evolved Node B), that are connected with each other via interface links IB 24, IA 25 and with an Access Gateway Box (AGB) 26 which is part of a CN 28 providing PS services only.

Compared to the Node Bs of the current UTRAN 10, the eNode Bs 21, 22, 23 of the overlay network 20 are directly connected with each other in order to allow context transfer and temporary data packet forwarding between them. Further the functionalities currently provided by the RNC 14 are mostly moved to the eNode Bs 21, 22, 23 and partly moved to the AGB 26.

The eNode B comprises means for developing control, user plane and legacy RNC functionality, the interface link IA 25 to the AGB 26 comprising means for transfer of control and packet data. Furthermore the eNode B comprises the interface link IB 24 to at least another eNode B. Thereby the means for developing control, user plane and legacy RNC functionality comprise means for mobile control, cell control and common and/or shared channel processing.

It is foreseen to deploy the eNode Bs of the EUTRAN overlay network additionally to said legacy UTRAN Node Bs preferably side by side on the same sites, as shown in Fig. 1.

A drawback of this solution are the high deployment costs resulting from installing completely new, additional base stations, i.e. the eNode Bs, in parallel to the current UTRAN Node Bs on their sites. This results in high capital investment due to high manufacturing costs for manufacturing the hardware of the totally independent eNode Bs, high installation costs for transporting and deploying the eNode Bs on site, and further high operational costs for rental of additional space on the installation site.

An object of the invention is to find a remedy for this problem.

The object of the invention is met by a base station comprising a software controllable and software definable equipment that via software definition is able to provide a Node B for the current UTRAN architecture or a future eNode B for the EUTRAN architecture or both at the same time, in order to be able to provide current UTRAN Node B functionalities and interfaces or future EUTRAN eNode B functionalities and interfaces or current UTRAN Node B functionalities and interfaces and future EUTRAN eNode B functionalities and interfaces at the same time via software control.

According to the invention, the current UTRAN Node B and the future EUTRAN eNode B are considered as logical nodes that are individually realized by the software controlled and software defined equipment within a base station according to the invention. To do so, at least one hardware board comprising at least one processor unit, a memory unit and a storage unit is arranged between a transceiver circuit and a terrestrial network interface connection of the base station according to the invention. The storage unit, that is e.g. a hard-disk, a chip or the like, preferably via remote control is able to store computer program means enabling the processor unit in combination with the memory unit to realize the interfaces as well as the functionalities of a current Node B or the interfaces as well as the functionalities of a future eNode B. If the computing power of the hardware board is high enough, only one hardware board can be used to realize the interfaces and functionalities of both, the UTRAN Node B and the EUTRAN eNode B. Preferably the base station according to the invention has a modular assembly comprising more than one slot to place such a hardware board. Doing so, it is possible to manufacture base stations initially to be used e.g. as current Node B only, that are basically equipped with only one hardware board. By initially installing only one hardware board, the current consumption of the base station is less than by installing two or more hardware boards ab initio, resulting in low operational costs.

When introducing the new EUTRAN overlay network, a second hardware board can be installed in a free slot. Thereby the hardware board can be designed according to the very latest state of the art when not installed ab initio. Furthermore, with the future introduction of new services requiring a higher computing power, it is easily possible to exchange only the hardware boards within their slots, than compared to the state of the art to exchange the whole base station.

Additionally the base station according to the invention has the advantage over the state of the art, that it allows to place a current UTRAN Node B as well as a future EUTRAN eNode B on the same site without the necessity to rent additional space on the installation site.

Preferably the transceiver circuit of the base station according to the invention provides at least four carriers with a bandwidth of 5 MHz. This is advantageous when introducing the overlay network that is planned to have a bandwidth of 20 MHz. Doing so, the transceiver circuit within the base station already is optimized on an overall bandwidth of at least 20 MHz, also resulting in low costs when introducing the new overlay network.

It is important to mention that for the realization of a base station for the architecture of the current UTRAN as well as for the future EUTRAN requires realizing the whole functionalities of the Node Bs mentioned above, as well as their interfaces between each other and between them and the CNs, as well as realizing the functionalities of the RNC in order to keep the particular standards according to the guidelines of the particular standardization boards.

A preferred embodiment of the invention concerns a method to deploy a current UTRAN node B and a future EUTRAN eNode B with one base station, said method comprising the steps of:
- arranging a software definable and configurable equipment within a base station to be deployed,
- realizing the functionalities of a current UTRAN Node B by computer program means within said software definable and configurable equipment, and
- realizing the functionalities of a future EUTRAN eNode B by computer program means within said software definable and configurable equipment.

A particularly preferred embodiment of the invention concerns a computer program product comprising computer program means enabling a software definable and configurable equipment within a base station to realize at least the functionalities of a current UTRAN Node B, or the functionalities of a future EUTRAN eNode B, or both at the same time, when being executed on said software definable and configurable equipment.

An additional preferred embodiment of the invention concerns a Radio Access Network (RAN) comprising a plurality of base stations as mentioned above.

Brief description of the drawings, with

Fig. 1 showing an architecture of a combined RAN as foreseen by the RAN Long Term Evolution (LTE),

Fig. 2 showing an architecture of an overlay network according to RAN LTE, and

Fig. 3 showing a scheme of the assembly of a base station according to the invention.

A main idea of the invention is to consider the legacy Node B and the new Overlay Node B, also called eNode B, as logical nodes realized by a software controlled and definable equipment within a new base station, and to implement both systems in the same equipment by appropriate computer program means. This is especially of interest as more the Node B equipment is designed according to Software Defined Radio (SDR) principles. The resulting base station according to the invention will then host two network architectures at the same time. This will be realized by adding new hardware boards with capabilities to support the new packet functions of the RAN LTE. This new hardware board is also backward compatible to provide CS functions.

This concept is perfectly capable to support a smooth migration from the legacy system comprising CS and PS services towards a data only system providing high speed PS services only that can be used to fulfill services provided by CS services today. As more user data traffic is transferred from the CS oriented legacy system towards the PS oriented data only system, the base station according to the invention can be configured to handle the needs.

With this invention the introduction of a data only system as overlay and then migrate the complete system towards data only by phasing out step by step the circuit traffic is perfectly covered. It provides a highly attractive cost efficient solution for mobile operators.

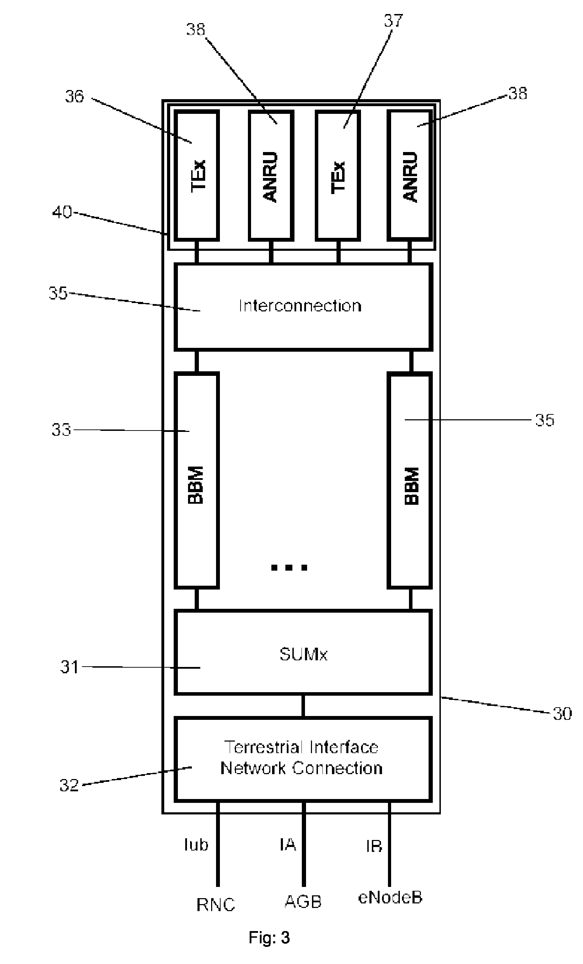

As shown in Fig. 3, a base station 30 according to the invention basically comprises a Multistandard Station Unit Module (SUMx) 31, which provides a terrestrial network interface connection 32, a plurality of slots to exchangeable and removable house different Base Band Modules (BBM) 33, 34, that, via an interconnection 35 are connected with a transceiver circuit 40 comprising different transmission equipments (TEx) 36, 37 and different Antenna Network and Receiver Units (ANRU) 38, 39 to be used for different standards.

The terrestrial network interface connection 32 provides a physical interface to be connected with an optical or electrical cable network. Depending on the software defined and software configured functionalities performed by the equipment within the base station 30 according to the invention, the terrestrial network interface connection 32 is able to provide e.g. a lub interface connection to a RNC, an interface link IA to an Access Gateway Box (AGB), an interface link IB to another base station also working as an eNode B and the like.

The individual BBMs 33, 34 are hardware boards comprising at least one processor unit, a memory unit and a storage unit. The BBMs 33, 34 are part of a software definable and configurable equipment within the base station 30. Depending on the desired configuration of the base station 30, i.e. depending on the standard to be fulfilled by the base station 30, the BBMs 33, 34 via software control realize the desired functionalities to be fulfilled by the base station 30.

The BBM 33 is used to realize the functionalities of an UTRAN Node B, wherein the BBM 34 is used to realize the functionalities of an EUTRAN eNode B.

If the base station according to the invention is to be used as an UTRAN Node B, the processor unit of the BBM 33 in combination with the memory unit and the storage unit realizes all functionalities to be fulfilled by a Node B. Furthermore the BBM controls the terrestrial interface connection 32 in order to provide the interfaces required by a Node B, like e.g. a lub interface connection to a RNC.

If the base station according to the invention is to be used as an EUTRAN eNode B, the processor unit of the BBM 34 in combination with the memory unit and the storage unit realizes all functionalities to be fulfilled by an eNode B. Furthermore the BBM controls the terrestrial interface connection 32 in order to provide the interfaces required by an eNode B, like e.g. the interface link IA to an access gateway box, the interface link IB to at least another eNode B and the like.

Furthermore, depending on the standard to be fulfilled, the software controlled BBMs 33, 34 control the interconnection 35 in order to be connected with a particular TEx that is able to fulfill the requirements of the particular standard.

The BBMs 33, 34 differ in computing power since to realize the functionalities of a Node B requires less computing power than to realize the functionalities of an eNode B. On the other hand, with a BBM 34 it is possible to realize the functionalities of a Node B as well as the functionalities of an eNode B. To do so, only another software has to be installed and stored on the storage unit of the BBM 34. If a BBM provides a very high computing power, it is also thinkable to provide the functionalities of a Node B as well as an eNode B with only one BBM.

Because of the modular assembly of the base station according to the invention, by exchanging the BBMs it is possible to keep the software definable and controllable equipment on the very latest state of the art in order to be able to realize the very latest functionalities via software control.

## Claims

1. Base station (30) **characterized by** a software controllable and software definable equipment (31, 32, 33, 34, 35) that via software definition provides a Node B for the current UTRAN architecture or a future eNode B for the future EUTRAN architecture or both at the same time, in order to be able to provide current UTRAN Node B functionalities or future EUTRAN eNode B functionalities or current UTRAN Node B functionalities and future EUTRAN eNode B functionalities at the same time via software control.

2. Base station according to claim 1, **characterized in that** the software controllable and software definable equipment (31, 33, 34, 35) comprises at least one hardware board that is arranged between a transceiver circuit (40) and a terrestrial network interface connection (32) within the base station(30), wherein said hardware board is able to realize at least the functionalities of a current UTRAN Node B or a future EUTRAN eNode B.

3. Base station according to claim 2, **characterized in that** the hardware board comprises at least a processor unit, a memory unit and a storage unit.

4. Base station according to claim 2 or 3, **characterized in** a modular assembly to exchangeable and removable house at least one hardware board.

5. Base station according to one of the previous claims, **characterized by** a transceiver circuit (40) comprising means (36, 37, 38, 39) to provide at least four carriers each one having a bandwidth of at least 5 MHz.

6. Method to deploy a current UTRAN node B and a future EUTRAN eNode B with one base station (30), **characterized by** the steps: arranging a software definable and configurable equipment (31, 32, 33, 34, 35) within a base station (30) to be deployed, realizing the functionalities of a current UTRAN Node B by computer program means within said software definable and configurable equipment (31, 32, 33, 34, 35), and realizing the functionalities of a future EUTRAN eNode B by computer program means within said software definable and configurable equipment (31, 32, 33, 34, 35).

7. Computer program product comprising computer program means enabling a software definable and configurable equipment (31, 32, 33, 34, 35) within a base station (30) to realize at least the functionalities of a current UTRAN Node B or the functionalities of a future EUTRAN eNode B or both at the same time, when being executed on said software definable and configurable equipment (31, 32, 33, 34, 35).

8. Radio Access Network comprising a plurality of base stations (30) according to one of the claims 1 to 5.

## Amended claims

### Amended claims in accordance with Rule 86(2) EPC.

**1.** Base station (30) **characterized by** a software controllable and software definable equipment (31, 32, 33, 34, 35) that via software definition provides a Node B comprising means to provide both, packet switched (PS) and circuit switched (CS) services for the UTRAN architecture, in which Node Bs are connected via an interface connection (lub 17) with a Radio Network Controller (RNC 14) which is connected via individual interface connections (lu-CS, lu-PS) with two core networks, a first one (15) providing CS services, and a second one (16) providing PS services, or an eNode B comprising means to provide high-speed PS services only for the EUTRAN architecture, in which eNode Bs are directly connected with each other via interface links (IB 24) and in which eNode Bs are connected via an interface link (IA 25) with an Access Gateway Box (AGB; 26) which is part of a core network (28) providing PS services only, or both at the same time, in order to be able to provide UTRAN Node B functionalities or EUTRAN eNode B functionalities or UTRAN Node B functionalities and EUTRAN eNode B functionalities at the same time via software control.

**6.** Method to deploy an UTRAN Node B comprising means to provide both, packet switched (PS) and circuit switched (CS) services for the UTRAN architecture, in which Node Bs are connected via an interface connection (lub 17) with a Radio Network Controller (RNC 14) which is connected via individual interface connections (lu-CS, lu-PS) with two core networks, a first one (15) providing CS services, and a second one (16) providing PS services, and an EUTRAN eNode B comprising means to provide high-speed PS services only for the EUTRAN architecture, in which eNode Bs are directly connected with each other via interface links (IB 24) and in which eNode Bs are connected via an interface link (IA 25) with an Access Gateway Box (AGB; 26) which is part of a core network (28) providing PS services only, with one base station (30), **characterized by** the steps: arranging a software definable and configurable equipment (31, 32, 33, 34, 35), and realizing the functionalities of an UTRAN Node B by computer program means within said software definable and configurable equipment (31, 32, 33, 34, 35), and realizing the functionalities of an EUTRAN eNode B by computer program means within said software definable and configurable equipment (31, 32, 33, 34, 35).

**7.** Computer program product comprising computer program means enabling a software definable and configurable equipment (31, 32, 33, 34, 35) within a base station (30) to realize at least the functionalities of an UTRAN Node B comprising means to provide both, packet switched (PS) and circuit switched (CS) services for the UTRAN architecture, in which Node Bs are connected via an interface connection (lub 17) with a Radio Network Controller (RNC 14) which is connected via individual interface connections (lu-CS, lu-PS) with two core networks, a first one (15) providing CS services, and a second one (16) providing PS services, or the functionalities of an EUTRAN eNode B comprising means to provide high-speed PS services only for the EUTRAN architecture, in which eNode Bs are directly connected with each other via interface links (IB 24) and in which eNode Bs are connected via an interface link (IA 25) with an Access Gateway Box (AGB; 26) which is part of a core network (28) providing PS services only, or both at the same time, when being executed on said software definable and configurable equipment (31, 32, 33, 34, 35).
